(19) Europäisches Patentamt

European Patent Office

Office européen des brevets

(11) **EP 0 750 257 B1**

(12) **FASCICULE DE BREVET EUROPEEN**

(45) Date de publication et mention
de la délivrance du brevet:
**26.09.2001 Bulletin 2001/39**

(51) Int Cl.⁷: **G06F 9/46**

(21) Numéro de dépôt: **96401332.0**

(22) Date de dépôt: **19.06.1996**

(54) **Procédé pour allouer des identificateurs de transaction, et système pour la mise en oeuvre de ce procédé**

Verfahren und Vorrichtung zur Zuteilung von Transaktionsidentifikatoren

Method for allocating transaction identifiers, and system for implementing this method

(84) Etats contractants désignés:
**BE CH DE ES GB IT LI NL SE**

(30) Priorité: **23.06.1995 FR 9507576**

(43) Date de publication de la demande:
**27.12.1996 Bulletin 1996/52**

(73) Titulaire: **ALCATEL**
**75008 Paris (FR)**

(72) Inventeurs:
• **Marine, Souheil**
**75013 Paris (FR)**
• **Bouveret, Louis**
**75012 Paris (FR)**
• **Arnaud, Pierre**
**91460 Marcoussis (FR)**
• **Paul-Dubois-Taine, Benoit**
**92340 Bourg la Reine (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**EP-A- 0 457 117        EP-A- 0 578 406**

## Description

L'invention concerne un procédé pour allouer un identificateur unique à chaque transaction dans un système comportant une mémoire non volatile et une pluralité de stations; et concerne un système pour la mise en oeuvre de ce procédé.

L'invention est applicable notamment dans un système de commande de réseau de télécommunication. Dans un tel système chaque station exécute une pluralité de processus applicatifs. Un ensemble d'opérations de lecture et/ou d'opérations d'écriture, demandées par un processus applicatif dans une même requête, est appelé transaction. Les processus applicatifs accèdent aux données, en lecture et/ou en écriture après avoir demandé l'ouverture d'une transaction, auprès d'un gestionnaire de données. Ce dernier répond en fournissant au processus applicatif un identificateur pour cette transaction. Ce processus applicatif accède ensuite aux données en utilisant cet identificateur. Une fois ces accès terminés, le processus applicatif demande au gestionnaire de données la fermeture de cette transaction. Le processus gestionnaire de données doit assurer qu'un ensemble d'accès effectués sous une même transaction sera validé entièrement lors de la fermeture de cette transaction, ou ne le sera pas du tout. Les modifications de données effectuées sous une transaction ne deviennent effectives, et donc visibles en dehors de cette transaction, qu'après sa fermeture avec succès.

Ces propriétés des transactions doivent être assurées en dépit des défaillances pouvant affecter : les stations, le processus ayant demandé l'ouverture de transactions, ou l'ensemble du système. Une défaillance d'un processus entraîne la perte des données qu'il contient dans sa propre mémoire. Une défaillance d'une station entraîne la perte de l'ensemble des données qu'elle mémorise et de l'ensemble des processus en cours d'exécution sur cette station. Cependant, certaines données peuvent être sauvegardées dans une mémoire non volatile telle que des disques sécurisés.

Un gestionnaire de données dispose d'un protocole de recouvrement permettant d'assurer l'achèvement cohérent d'un ensemble de transactions qui étaient ouvertes, ou en cours de fermeture, au moment de la défaillance du processus ayant demandé leur ouverture. Ce type de protocole repose sur le principe suivant : les effets d'une telle transaction sont validés si des effets de cette transaction subsistent dans au moins une station ou dans la mémoire non volatile, et s'il y a une trace quelconque d'une décision de fermeture de cette transaction, prise par le processus applicatif ayant demandé son ouverture, et perçue par au moins une station ou par la mémoire non volatile. Sinon, les effets de cette transaction ne sont pas validés. Un tel protocole de recouvrement nécessite donc de reconnaître de façon non ambigüe une transaction qui a été ouverte par un processus défaillant.

Les gestionnaires de données, utilisés actuellement dans les systèmes de commande pour réseau de télécommunication, n'assurent pas la distribution des transactions sur plusieurs stations. Autrement dit, chaque transaction ne peut concerner que des données mémorisées dans la station où est exécuté le processus applicatif demandant l'ouverture puis la fermeture de cette transaction. Cette limitation des possibilités d'une transaction a pour avantage de simplifier beaucoup le processus de recouvrement à la suite d'une panne de station, et de ne pas nécessiter une unicité spatiale et temporelle des identificateurs de transaction. En effet, puisque chaque transaction n'intervient que sur des données locales, il n'y a aucun inconvénient à ce que plusieurs transactions aient par hasard le même identificateur, dans la mesure où ces transactions ne sont pas ouvertes dans une même station.

EP-A-0 578 406 traite d'un protocole de validation de transactions à deux phases. Les transactions disposent d'un identificateur séquentiel (TID) et la validation n'est autorisée que pour des transactions dont le TID a une valeur pas trop éloignée de celle d'une transaction déjà validée. En cas de défaillance, il reste un ensemble de transactions indéterminées dont on suppose alors qu'elles ont toutes avorté.

Les systèmes de commande de réseau de télécommunication supportent de plus en plus de services, et ces services sont de plus en plus complexes. Pour assurer des services plus complexes, il faut envisager un gestionnaire pour des données distribuées dans une pluralité de stations, tout en répondant aux contraintes de fonctionnement en temps réel et de résistance aux pannes, contraintes qui sont primordiales dans le domaine des télécommunications. Il existe des systèmes de gestion de base de données permettant de gérer des données distribuées sur une pluralité de stations. Cependant ces bases de données ne sont pas transposables dans le domaine des télécommunications parce que la structure des données, et les moyens de stockage qui sont généralement des disques, ne procurent pas des performances suffisantes pour un fonctionnement en temps réel.

Dans le cas où une transaction pourrait accéder à des données distribuées sur plusieurs stations, le protocole de recouvrement nécessiterait une unicité des identificateurs de transaction, à la fois spatiale et temporelle. L'unicité temporelle doit être assurée dans le cas suivant : si une nouvelle instance d'un processus est activée à la suite de la défaillance d'une autre instance, les transactions ouvertes par ces deux instances d'un même processus doivent pouvoir être distinguées, pour réaliser correctement un recouvrement des transactions.

A priori, un identificateur comportant trois champs devrait permettre de distinguer sans ambiguïté toutes les transactions ouvertes dans l'ensemble du système :

- Un champ peut permettre distinguer les transactions ouvertes successivement par un même processus applicatif, si ce champ contient une valeur de compteur incrémentée pour chaque ouverture.
- Un champ peut permettre de distinguer les transactions ouvertes par différents processus applicatifs dans une même station.
- Un champ peut permettre de distinguer les transactions ouvertes par des processus applicatifs exécutés dans les différentes stations constituant le système.

Malheureusement ceci n'est plus vrai après la défaillance et le rédémarrage de la station où est exécuté le processus applicatif ayant demandé l'ouverture de la transaction considérée, parce que la valeur de compteur distinguant les transactions successives est perdue. Cette valeur redémarre donc à zéro lorsque cette station redémarre. Une valeur de compteur peut alors être attribuée alors que la même valeur peut être encore en usage dans l'identificateur d'une transaction qui n'est pas encore fermée.

Le but de l'invention est donc de proposer un procédé selon la revendication 1 et un système selon la revendication 5 pour allouer à chaque transaction un identificateur qui reste unique, dans le temps et dans l'espace malgré des défaillances de processus, de station, ou de l'ensemble du système. Ce procédé doit être applicable dans un système où chaque processus applicatif peut demander l'ouverture de transactions portant sur des données distribuées dans plusieurs stations; et doit permettre de satisfaire les contraintes de fonctionnement en temps réel.

L'objet de l'invention est un procédé pour allouer un identificateur unique à chaque transaction dans un système comportant une mémoire non volatile et une pluralité de stations, chaque station exécutant une pluralité de processus applicatifs; toutes les stations et la mémoire non volatile étant reliées par un réseau de communication, assurant l'intégrité des communications;

caractérisé en ce qu'il consiste à :

- déterminer un premier champ de cet identificateur, ayant :

  -- soit une valeur provisoire, identifiable comme telle et unique sur l'ensemble des stations, si l'ouverture de la transaction est demandée pendant une première phase d'initialisation;
  -- soit une valeur attribuée par un premier processus gestionnaire de données commun à l'ensemble des stations si l'ouverture est demandée après ladite première phase d'initialisation; ce premier processus gestionnaire mettant en oeuvre en outre un protocole connu de recouvrement de transactions;

- déterminer un deuxième champ ayant :

  -- soit une valeur provisoire, identifiable comme telle, et unique sur la station exécutant le processus applicatif dit demandeur ayant demandé l'ouverture de la transaction, si l'ouverture est demandée pendant une seconde phase d'initialisation ;
  -- soit une valeur attribuée par un second processus gestionnaire de données, ce second processus gestionnaire étant propre à la station qui exécute le processus demandeur, si l'ouverture de la transaction est demandée après ladite seconde phase d'initialisation;

- déterminer un troisième champ en incrémentant d'une unité un compteur propre au processus demandeur;

en ce que la valeur attribuée par le premier processus gestionnaire est le résultat de l'incrémentation, d'une unité, d'une première valeur de compteur propre à ce premier processus gestionnaire, et sauvegardée dans la mémoire non volatile; cette valeur de compteur étant restaurée après chaque défaillance de la station exécutant le premier processus gestionnaire;
en ce que la valeur attribuée par le second processus gestionnaire est le résultat de l'incrémentation, d'une unité, d'une seconde valeur de compteur propre à ce second processus gestionnaire;
en ce que ladite première phase d'initialisation est achevée, pour un second processus gestionnaire donné, lorsqu'il a établi une liaison avec le premier processus gestionnaire;
et en ce que ladite seconde phase d'initialisation est achevée, pour un processus applicatif donné, lorsqu'il a établi une liaison avec le second processus gestionnaire propre à la station où est exécuté ce processus applicatif.

Le procédé ainsi caractérisé consiste à distinguer plusieurs périodes de fonctionnement pour chaque processus applicatif : une première phase d'initialisation pendant laquelle est initialisée l'instance du second processus gestionnaire propre à la station où est exécuté ce processus applicatif, et une seconde phase d'initialisation, indépendante de la première, pendant laquelle est initialisé le processus applicatif considéré. Tant que l'une ou/et l'autre de ces deux phases d'initialisation n'est pas achevée, le procédé n'assure pas l'unicité temporelle des identificateurs de transactions, mais il permet d'éviter qu'un défaut d'unicité ait un effet sur la cohérence des données. En effet, il suffit d'interdire à une transaction d'accéder à des données autres que celles situées dans la station où a été ouverte la transaction, ou de modifier des données situées dans cette station et mémorisées aussi dans la mémoire non volatile, pour éviter toute incohérence entre les stations.

Le procédé selon l'invention rend identifiables les transactions qui ont été ouvertes pendant au moins une des deux phases d'initialisation de cette station, en attribuant au premier champ et au deuxième champ de chaque identificateur de transaction, une valeur provisoire identifiable comme telle. Pour déterminer si une transaction a le droit d'accéder à des données mémorisées dans des stations autres que la station où cette transaction a été ouverte, il suffit alors de déterminer si le premier ou le deuxième champ de l'identificateur de cette transaction comporte une valeur provisoire.

Après l'achèvement des deux phases d'initialisation l'unicité temporelle des identificateurs des transactions ouvertes par un processus applicatif donné est assurée, même après une défaillance et un redémarrage du premier processus gestionnaire, d'une part parce que la valeur de compteur propre à ce premier processus gestionnaire est restaurée à partir de la mémoire non volatile, mais surtout parce que l'achèvement du rétablissement des liaisons entre le premier processus gestionnaire et tous les seconds processus gestionnaires garantie que le protocole de recouvrement permet de recouvrer absolument toutes les transactions qui pourraient être affectées par la défaillance d'une station.

Selon un mode de mise en oeuvre préférentiel, ladite première phase d'initialisation, pour un second gestionnaire de données donné, consiste à :

- faire demander par ce second processus gestionnaire l'établissement d'une liaison entre ce second processus gestionnaire et le premier processus gestionnaire, en accompagnant cette demande d'un indicateur permettant de distinguer si une telle liaison a déjà été établie ou non, depuis le dernier démarrage de ce second processus gestionnaire;
- établir une telle liaison;
- et si l'indicateur indique que cette liaison est établie pour la première fois,

  -- incrémenter d'une unité la valeur de compteur mémorisée dans la mémoire propre au premier processus gestionnaire;
  -- sauvegarder la valeur incrémentée en l'inscrivant dans la mémoire non volatile;
  -- puis fournir la valeur de compteur au second processus gestionnaire ayant demandé une liaison.

Dans le procédé ainsi caractérisé, l'indicateur permet de distinguer deux cas :

- Dans le cas où la station exécutant le second processus gestionnaire redémarre à la suite d'une défaillance qui a effacé ses mémoires, il y a lieu de reprendre en compte cette station comme une nouvelle station, pour distinguer les transactions ouvertes postérieurement à ce rédémarrage, sinon elles pourraient avoir les mêmes identificateurs que des transactions ouvertes antérieurement.

- Dans le cas où cette station a fonctionné parfaitement mais a été momentanément isolée du premier processus gestionnaire par une défaillance de la station exécutant ce premier processus gestionnaire, il n'y a pas lieu de la compter comme une nouvelle station car il n'y a pas de risque d'avoir attribué des identificateurs identiques à transactions ouvertes antérieurement à la défaillance et à des transactions ouvertes postérieurement à la défaillance, puisque le contenu des mémoires de cette station n'a pas été altéré.

Selon un mode de mise en oeuvre préférentiel, la seconde phase d'initialisation pour un processus applicatif donné, consiste à :

- faire demander par ce processus applicatif l'établissement d'une liaison entre ce processus applicatif et le second processus gestionnaire qui est propre à la station où est exécuté ce processus applicatif;
- établir une telle liaison;
- incrémenter d'une unité la valeur de compteur propre à ce second processus gestionnaire.

L'invention a aussi pour objet un système pour la mise en oeuvre de ce procédé.

L'invention sera mieux comprise et d'autres caractéristiques apparaîtront à l'aide de la description ci-dessous et des figures l'accompagnant :

- la figure 1 représente le schéma synoptique d'un exemple de système pour la mise en oeuvre du procédé selon l'invention;
- les figures 2 à 6 représentent une partie de cet exemple de système en illustrant respectivement diverses étapes du démarrage de ce système :

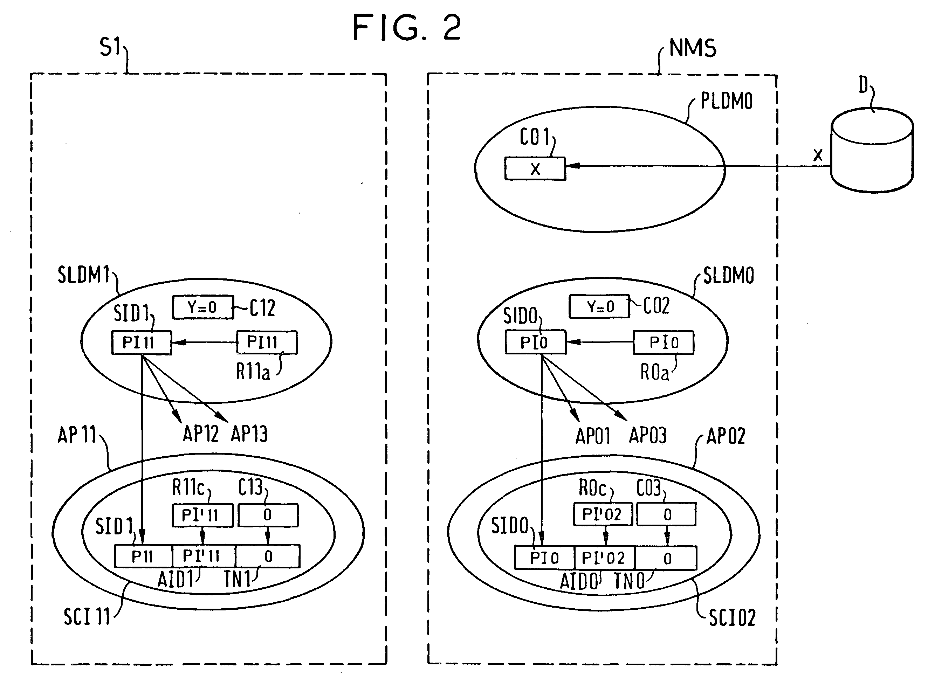

  -- la figure 2 illustre le démarrage des stations et la restauration de la valeur de compteur propre au premier processus gestionnaire;

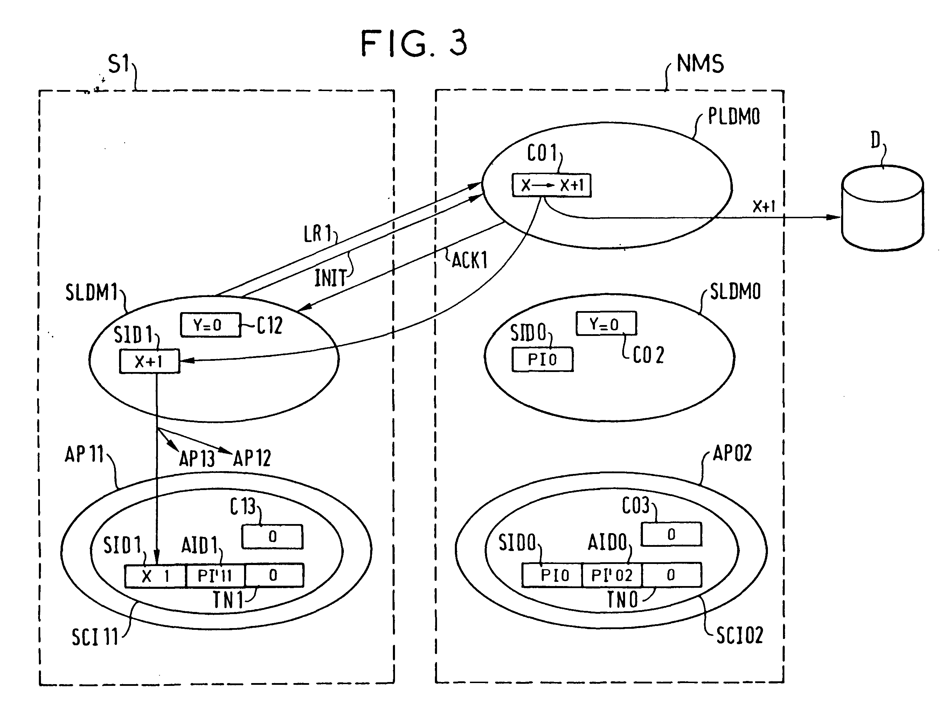

  -- la figure 3 illustre la phase d'initialisation du second processus gestionnaire dans une station secondaire;

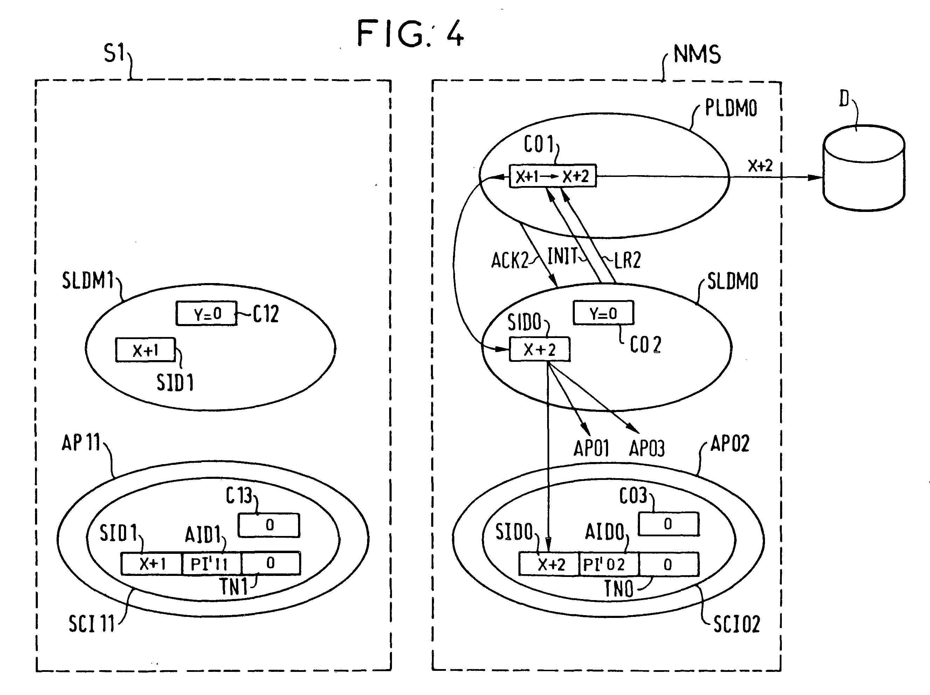

  -- la figure 4 illustre la phase d'initialisation du second processus gestionnaire dans une station principale;

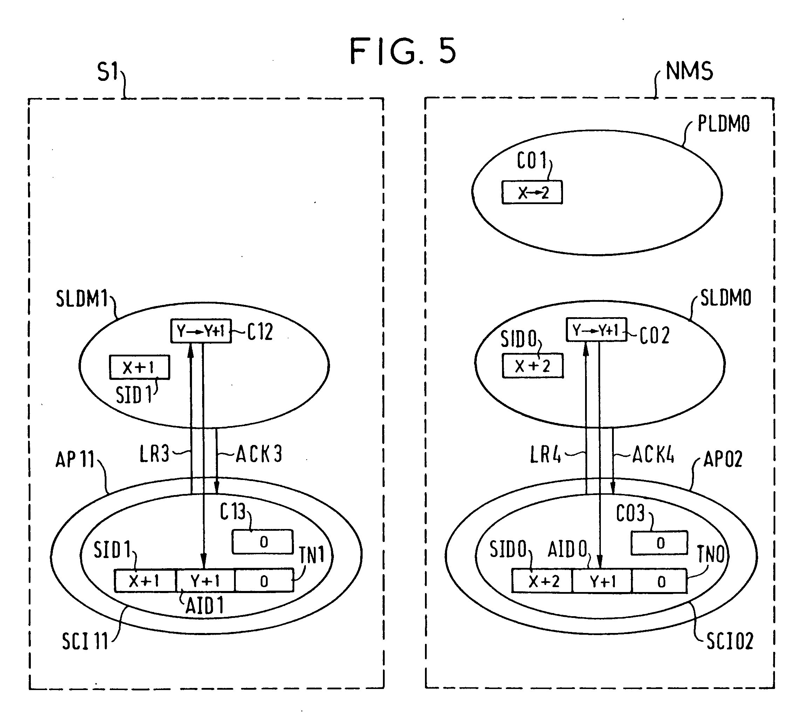

  -- la figure 5 illustre la phase d'initialisation de deux processus applicatifs;

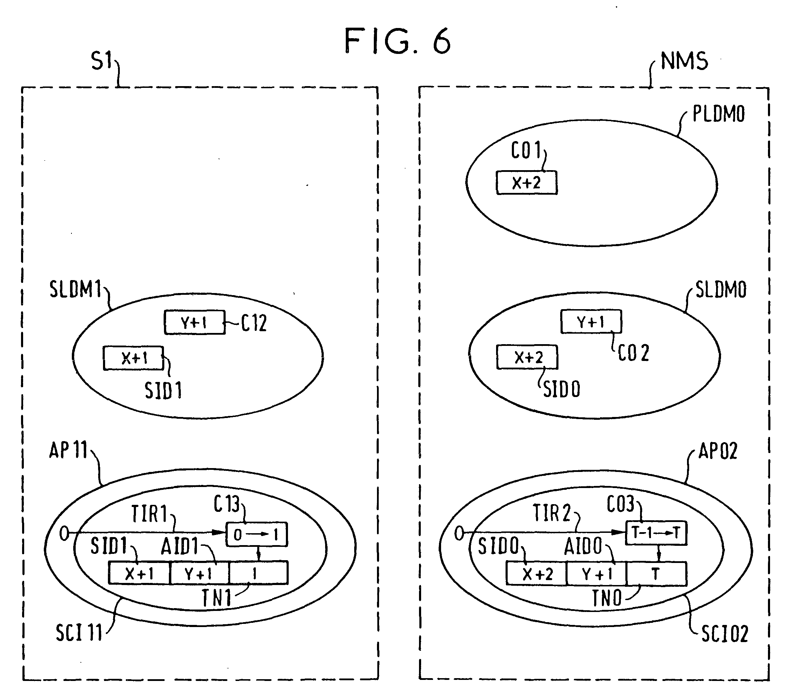

  -- la figure 6 illustre l'attribution d'identificateurs de transaction après la fin des phases d'initialisation;

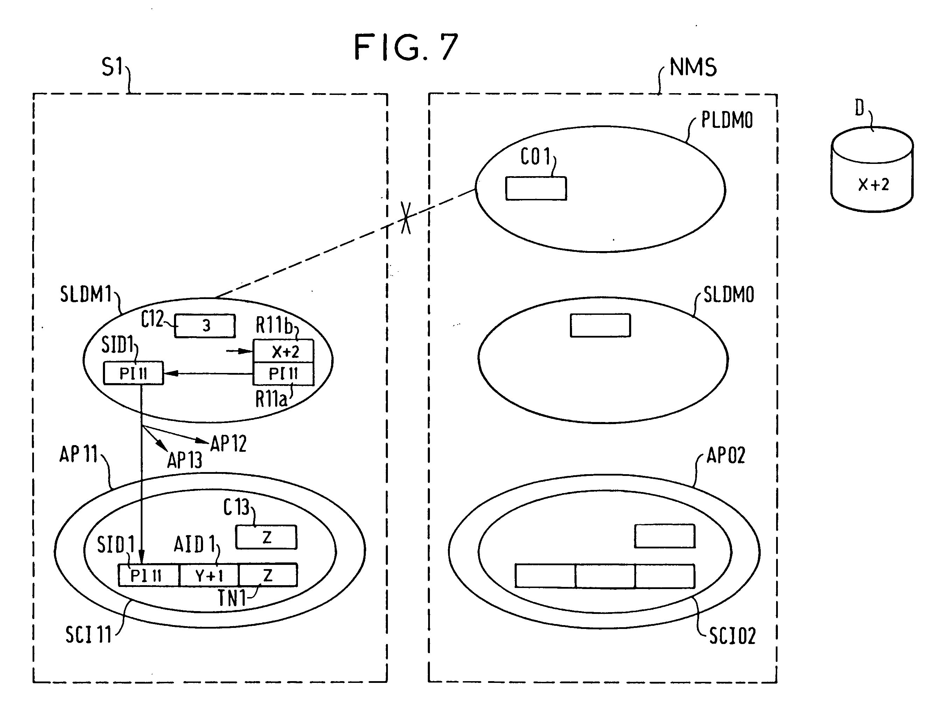

- la figure 7 représente la même partie de cet exemple de système, en illustrant la mise en oeuvre du procédé selon l'invention lorsqu'un second processus gestionnaire détecte la rupture d'une liaison précédemment établie entre ce second processus gestionnaire et le premier processus gestionnaire, à cause d'une défaillance de la station principale;

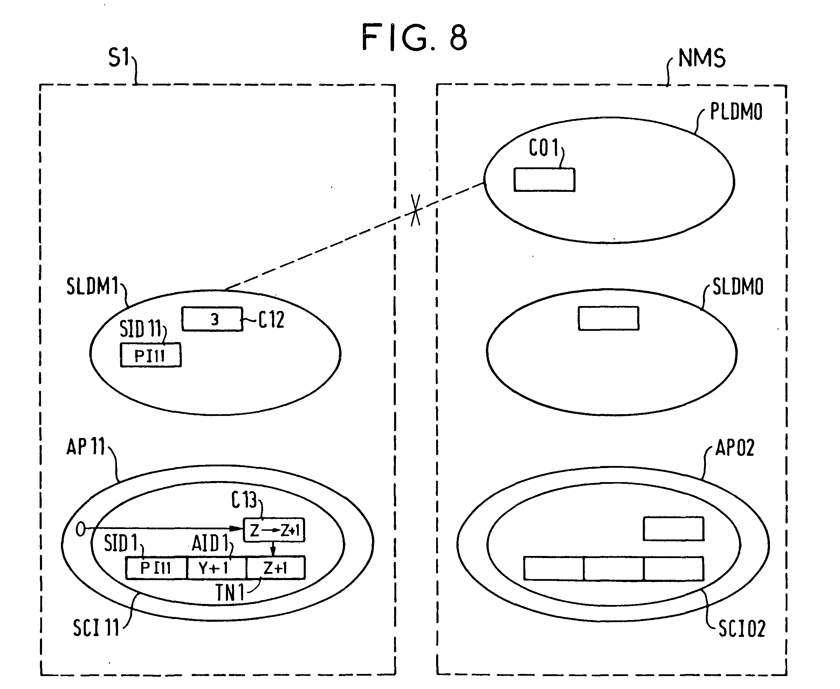

- la figure 8 représente la même partie de cet exemple de système, en illustrant l'attribution d'un identificateur à une transaction pendant l'intervalle de temps où cette liaison est interrompue;

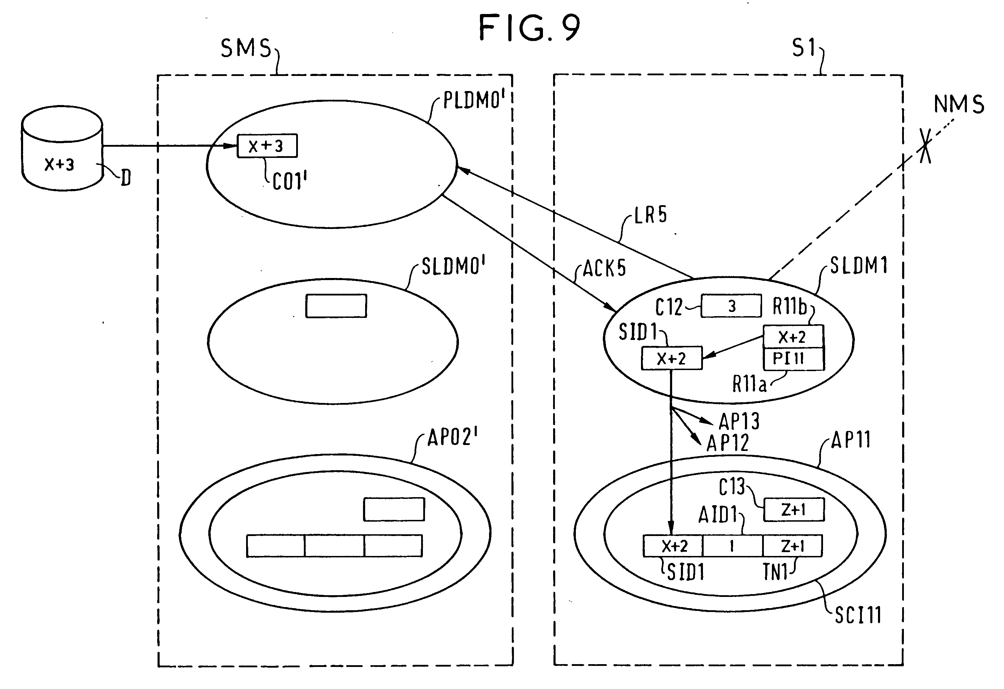

- la figure 9 représente schématiquement une partie de cet exemple de système, en illustrant la restauration du fonctionnement de ce système après une panne ayant affecté la station exécutant le premier processus gestionnaire de données;

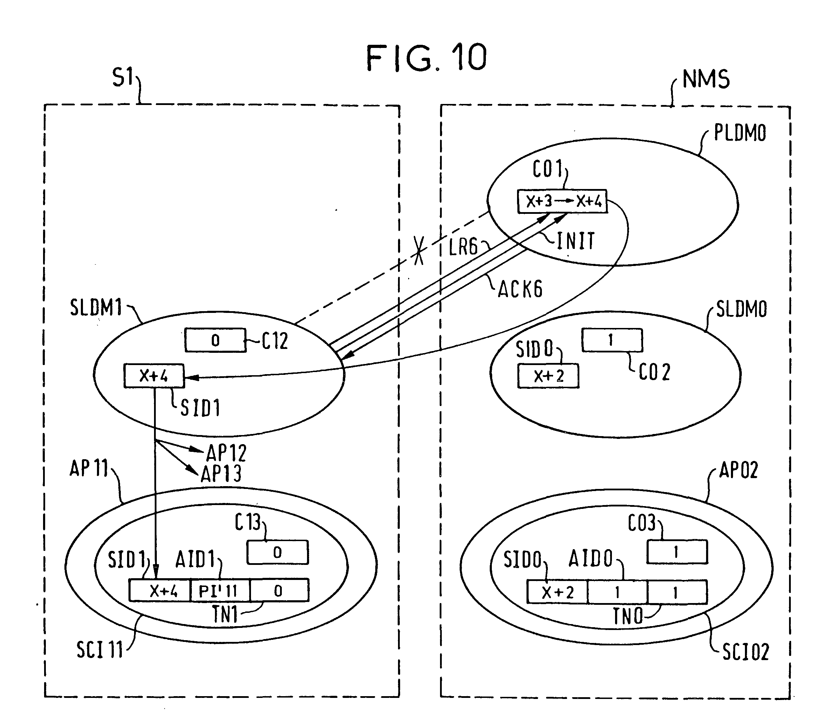

- la figure 10 représente schématiquement une partie de cet exemple de système, en illustrant la restauration du fonctionnement d'une station qui n'est pas celle comportant le premier processus gestionnaire, après une panne ayant affecté cette station.

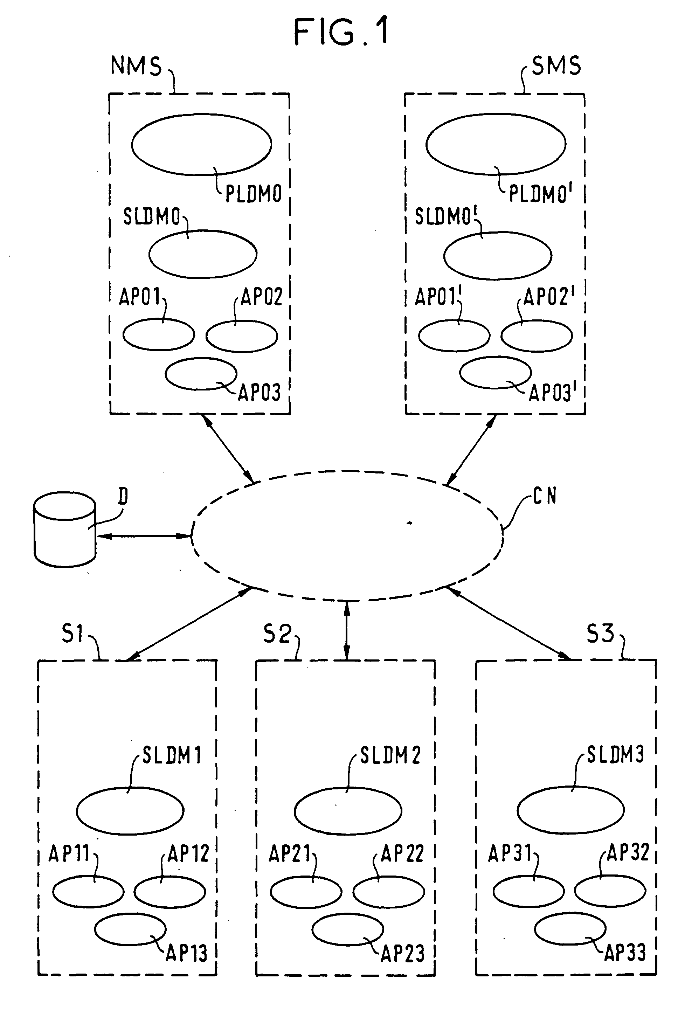

La figure 1 représente le schéma synoptique d'un exemple de système pour la mise en oeuvre du procédé selon l'invention, comportant :

- une station principale dite normale, NMS, et une station principale dite de secours, SMS, cette dernière n'étant utilisée qu'en cas de défaillance de la station principale normale;

- trois stations dites secondaires S1, S2, S3;

- une mémoire non volatile D sécurisée, constituée d'un disque ou d'un ensemble de disques muni d'un contrôleur de disque;

- un réseau de communication SN reliant toutes les stations et la mémoire non volatile D par des liaisons bidirectionnelles sécurisées.

La mémoire non volatile D est sécurisée de telle sorte que son contenu n'est pas altéré lors d'une panne partielle ou totale de l'ensemble du système. Elle mémorise notamment une réplique de certaines des tables de données qui sont distribuées et utilisées dans les stations, et la valeur de compteur qui est propre au premier processus gestionnaire de données. Le procédé de sécurisation de la mémoire non volatile D et du réseau de communication CN ne sera pas décrit plus en détail car il fait partie de la technique classique.

La gestion des données distribuées dans les différentes stations est assurée par un gestionnaire de données, qui lui-même est distribué et constitué :

- d'un premier processus gestionnaire de données, unique pour l'ensemble du système, qui est un processus PLDM0 exécuté dans la station principale normale NMS si celle-ci fonctionne, et qui est remplacé par une réplique PLDM0' exécutée par la station principale de secours SMS si la station principale normale NMS vient à tomber en panne;

- de seconds processus gestionnaires de données, référencés respectivement SLDM0, SLDM0', SLDM1, SLDM2, SLDM3, exécutés respectivement dans les stations NMS, SMS, S1, S2, et S3;

- des processus applicatifs AP01, AP02, AP03 exécutés dans la station principale normale NMS, et répliqués sous la forme de processus applicatifs AP01', AP02', AP03' dans la station principale de secours SMS;

- des processus applicatifs AP11, AP12, AP13 exécutés dans la station secondaire S1;

- les processus applicatifs AP21, AP22, AP23, exécutés dans la station secondaire S2;

- des processus applicatifs AP31, AP32, AP33; exécutés dans la station secondaire S3.

Le premier processus gestionnaire, PLDM0, et sa réplique PLDM0', mettent en oeuvre un protocole de recouvrement permettant d'assurer l'achèvement cohérent de l'ensemble des transactions ouvertes ou en cours de fermeture, lorsqu'une défaillance d'une station interrompt l'exécution du processus applicatif ayant demandé l'ouverture de cette transaction. Un tel protocole de recouvrement est décrit par exemple dans la demande de brevet français n°94 13900.

Un tel protocole a pour effet que toute transaction est soit complètement exécutée, soit complètement inexécutée. Un tel protocole nécessite de reconnaître de façon non ambiguë chaque transaction qui a été ouverte par un processus applicatif qui devient défaillant lorsque la station qui le supporte tombe en panne. Dans le cas de transactions distribuées sur plusieurs stations, cette non-ambiguïté doit être à la fois spatiale et temporelle. En effet, si un processus applicatif est défaillant après avoir ouvert une transaction, il faut pouvoir distinguer les transactions ouvertes avant la défaillance, et les transactions ouvertes après la défaillance par une nouvelle instance du même processus applicatif, parce que le recouvrement des transactions ouvertes par l'instance défunte peut être encore en cours lorsque la nouvelle instance démarre.

Chaque processus applicatif comporte une interface faisant partie intégrante de ce processus applicatif et qui lui permet d'accéder aux services du gestionnaire de données, en établissant une liaison avec le second processus gestionnaire qui est situé dans la même station que le processus applicatif considéré. Cette interface n'est pas représentée sur la figure 1. Le démarrage et l'arrêt de cette interface sont concomitants à ceux du processus applicatif qui contient cette interface.

Chaque fois qu'un processus applicatif demande l'ouverture d'une transaction le second processus gestionnaire situé dans la même station fournit au processus applicatif demandeur un identificateur de transaction comportant quatre champs :

- un premier champ, noté SID, permettant de distinguer la station où est exécuté le processus applicatif demandeur, parmi toutes les stations du système;

- un deuxième champ, noté AID, permettant de désigner le processus applicatif demandeur parmi tous les processus applicatifs exécutés dans une même station;

- un troisième champ, noté TN, permettant de distinguer une transaction parmi toutes les transactions ouvertes par un même processus applicatif;

- un quatrième champ, destiné à une détection d'erreur.

La figure 2 représente schématiquement une partie de cet exemple de système, c'est-à-dire la station secondaire S1 et la station principale normale NMS, en illustrant le démarrage des stations. Un seul processus applicatif est représenté à titre d'exemple dans chaque station : AP11 pour la station S1, et AP02 pour la station NMS. La mise en oeuvre est analogue dans les autres processus applicatifs non représentés, dans ces deux stations, et analogue aussi dans les autres stations secondaires du système.

Un démarrage ou un redémarrage de la station principale NMS consiste notamment à transférer de la mémoire non volatile D à une mémoire C01 propre au premier processus gestionnaire PLDM0 une valeur de compteur, X, qui a été sauvegardée lors du dernier arrêt de la station principale, normale ou secours. Cette valeur de compteur, X, sera incrémentée ultérieurement pour affecter une valeur au premier champ SID qui permet de distinguer chacune des stations. En attendant l'achèvement d'une phase d'initialisation du second processus gestionnaire SLDM0, un démarrage ou un redémarrage de la station principale NMS consiste en outre à remettre à 0 une valeur de compteur, Y, qui est propre à cette station NMS et qui est mémorisée dans une mémoire C02, propre à ce premier processus gestionnaire SLDM0, située dans la station NMS. Cette valeur de compteur Y n'est pas sauvegardée en cas de panne.

De manière analogue, dans la station secondaire S1, un démarrage ou un redémarrage de cette station consiste à remettre à 0 une valeur de compteur qui est propre à cette station S1, et qui est mémorisée dans une mémoire C12 propre à ce second processus SLDM1, et située dans la station S1. Cette valeur de compteur n'est pas sauvegardée en cas de panne.

Des transactions peuvent être ouvertes à tout moment, y compris pendant le démarrage ou le redémarrage d'une ou de plusieurs stations.

Une phase d'initialisation d'un second processus gestionnaire SLDM consiste à établir une liaison avec le premier processus gestionnaire commun pour l'ensemble du système, en l'occurrence le processus PLDM0.

Tant qu'il n'y a aucune liaison établie entre le second processus gestionnaire SLDM d'une station et le premier processus gestionnaire PLDM0 de la station principale, la valeur affectée au premier champ SID d'un identificateur de transaction est constituée par une valeur provisoire, identifiable comme telle, qui peut être un numéro fixe affecté au processeur de la station et distinct de ceux affectés aux autres processeurs, afin d'assurer l'unicité spatiale. Par exemple, dans la station secondaire S1, une valeur provisoire PI11 est lue dans un registre R11a pour constituer la valeur provisoire du premier champ SID1 des identificateurs de transaction, pour les transactions ouvertes par des processus applicatifs exécutés dans la station S1. Cette valeur provisoire est diffusée par le second processus gestionnaire SLDM1 aux processus d'application AP11, AP12, AP13. Dans la station principale normale NMS, une valeur provisoire PI0 est lue dans un registre R0a pour constituer le premier champ SID0 des identificateurs de transaction affectés aux transactions ouvertes par des processus applicatifs exécutés dans cette station NMS. Cette valeur provisoire est diffusée par le second processus gestionnaire SLDM0 vers les processus applicatifs AP01, AP02, AP03.

Chacun des processus applicatifs comporte une interface SCI lui permettant d'accéder aux services du gestionnaire de données. Lors du démarrage ou du redémarrage d'une station, une phase d'initialisation de chaque processus applicatifs exécuté dans cette station consiste à établir une liaison entre son interface et le second processus gestionnaire exécuté dans la même station.

Tant qu'il n'y a aucune liaison établie entre ce processus applicatif et ce second processus gestionnaire, la valeur affectée au deuxième champ AID d'un identificateur de transaction est constituée par une valeur provisoire, identifiable comme telle. Cette valeur provisoire est déterminée à partir d'une caractéristique distinctive du processus applicatif qui contient cette interface. C'est, par exemple, un numéro d'ordre attribué par le système d'exploitation de la station considérée. Ce numéro assure une unicité spatiale au niveau de la station.

Par exemple, dans l'interface SCI11 du processus applicatif AP11, une valeur provisoire PI'11 est lue dans une mémoire R11c propre à l'interface SCI11 pour constituer le second champ AID1 d'un identificateur de transaction. Dans l'interface SCI02 du processus applicatif AP02, une valeur provisoire PI'02 est lue dans une mémoire R0c propre à l'interface SCIO2 pour constituer le second champ AID0 d'un identificateur de transaction.

La phase d'initialisation de chacun des processus applicatifs consiste en outre à remettre à zéro une valeur de compteur dans une mémoire propre à son interface. Cette valeur de compteur sera incrémentée ultérieurement pour constituer la valeur affectée au troisième champ TN d'un identificateur de transaction. Elle permet de distinguer les différentes transactions ouvertes par un même processus applicatif. Par exemple, dans le processus applicatif AP11 l'interface SCI11 possède une mémoire C13 qui contient une valeur de compteur qui est remise à zéro. Dans le processus applicatif AP02, l'interface SCI02 comporte une mémoire C03 qui contient une valeur de compteur qui est remise à zéro.

Dès la fin de cette première étape du démarrage ou du redémarrage d'une station, un processus applicatif peut demander l'ouverture d'une transaction et obtient un identificateur de transaction dont les trois premiers champs ont les valeurs suivantes :

PI11, PI'11, 1 pour une première demande d'ouverture émanant du processus applicatif AP11.

PI0, PI'02, 1 pour une première demande d'ouverture émanant du processus applicatif AP02.

La valeur du troisième champ est incrémentée pour chaque nouvelle demande d'ouverture de transaction dans la station considérée.

Un protocole connu, mis en oeuvre par le premier processus gestionnaire PDLM0 ou par sa réplique PDLM0', est destiné à recouvrer les transactions ouvertes ou en cours de fermeture au moment d'une défaillance d'une station secondaire ou principale. Cependant ce protocole ne peut être mis en oeuvre tant qu'une liaison n'a pas été établie entre le processus applicatif ayant ouvert la transaction à recouvrer et le second processus applicatif exécuté dans la même station, et tant qu'une liaison n'a pas été établie entre le second processus gestionnaire et le premier processus gestionnaire.

Pour éviter que des incohérences de données résultent de l'impossibilité de mettre en oeuvre ce protocole, le gestionnaire de données interdit à une transaction d'accéder en lecture ou en écriture à des données qui ne sont pas situées dans la station où est exécuté le processus applicatif ayant demandé l'ouverture de cette transaction, si cette ouverture a eu lieu avant l'achèvement de la phase d'initialisation du processus applicatif demandeur et l'achèvement de la phase d'initialisation du second processus gestionnaire exécuté dans cette même station. Cette interdiction est appliquée également aux modifications de données qui sont situées dans cette station mais qui sont en outre sauvegardées dans la mémoire non volatile D.

Une transaction ouverte dans ces conditions est reconnaissable par le fait que son identificateur contient au moins une valeur provisoire.

Le gestionnaire de données assure donc un service réduit pour les transactions ouvertes dans ces conditions mais il garantit ainsi l'unicité des identificateurs de transaction, quelles que soient les défaillances de station qui peuvent se produire pendant les phases d'initialisation.

La figure 3 représente la même partie de cet exemple de système, en illustrant l'achèvement de la phase d'initialisation du second processus gestionnaire SLDM1. Celui-ci adresse au premier processus gestionnaire PLDM0 de la station principale en service, une demande LR1 pour l'établissement d'une liaison entre ce premier processus gestionnaire PLDM0 et ce second processus gestionnaire SLDM1, en accompagnant cette demande d'un indicateur INIT indiquant qu'une telle liaison n'a pas déjà été établie depuis le dernier démarrage ou redémarrage de ce second processus gestionnaire SLDM1. La demande LR1 provoque dans le premier processus gestionnaire PLDM0 l'incrémentation de la valeur de compteur X mémorisée dans la mémoire C01. La valeur incrémentée X+1 est immédiatement sauvegardée en l'inscrivant dans la mémoire non volatile D. Puis un accusé de réception ACK1 est envoyé au second processus gestionnaire SLDM1, ainsi que la valeur de compteur X+1 qui constitue désormais la valeur affectée au premier champ SID1 des identificateurs de transaction pour les transactions ouvertes par les processus applicatifs AP11, AP12, AP13, qui sont rattachés au second processus gestionnaire SLDM1. Cette valeur X+1 est diffusée en effet aux interfaces de chacun de ces processus applicatifs AP11, AP12, AP13.

Cette étape d'initialisation du second processus gestionnaire serait rigoureusement identique dans le cas d'un redémarrage de la station S1 à la suite d'une défaillance de celle-ci, causant la rupture d'une liaison établie avec PLDM0. Par contre, elle serait différente dans le cas où la rupture de la liaison avec PLDM0 serait due à une défaillance de la station principale NMS. Ces deux cas seront décrits plus loin en se référant aux figues 10 et 7-8-9 respectivement.

La figure 4 représente schématiquement la même partie de cet exemple en illustrant l'achèvement de la phase d'initialisation du second processus gestionnaire SLDM0 de la station principale normale NMS. Dans cet exemple, la valeur de compteur mémorisée dans la mémoire C01 du premier processus gestionnaire PLDM0 est égale à X+1 au moment où le second processus gestionnaire SLDM0 émet une demande d'établissement de liaison, LR2, accompagnée d'un indicateur INIT indiquant que c'est la première fois que cette liaison sera établie depuis le dernier démarrage ou redémarrage du second processus gestionnaire SLDM0.

Cette demande LR3 provoque l'incrémentation d'une unité de la valeur de compteur, X+1, dans la mémoire C01 du processus gestionnaire PLDM0. La valeur incrémentée, X+2, est sauvegardée immédiatement dans la mémoire non volatile D puis est transmise au processus gestionnaire SLDM0 avec un accusé de réception ACK2 indiquant qu'une liaison est établie.

Cette valeur X+2 est désormais affectée au processus gestionnaire SLDM0 pour constituer la valeur du champ SID0. Elle permettra de distinguer toutes les transactions ouvertes par des processus applicatifs exécutés dans la station NMS. Cette valeur constitue le premier champ SID0 des identificateurs attribués à ces transactions. Cette valeur X+2 est diffusée du processus SLDM0 vers les interfaces de chacun des processus applicatifs AP01, AP02, AP03, de la station NMS. En particulier cette valeur est reçue par l'interface SCI02 du processus applicatif AP02.

A ce stade de l'initialisation, si le processus applicatif AP02 ouvre une première transaction, l'identificateur de transaction qui sera attribué aura comme trois premiers champs :

$$X+2, PI'02, 1$$

La valeur X+2 affectée au premier champ SID0 permet de distinguer les transactions ouvertes dans la station NMS, par rapport aux transactions ouvertes par exemple dans la station S1 pour lesquelles le premier champ SID1 a la valeur X+1.

A ce stade, les transactions ouvertes par des processus applicatifs AP01, AP02, AP03 de la station NMS ne peuvent modifier que des données situées dans cette même station, car le gestionnaire de donnnées détecte que les identificateurs de ces transactions comportent une valeur provisoire PI'02 dans le deuxième champ. Il leur interdit donc toute opération de lecture ou d'écriture dans d'autres stations, et toute écriture pour une donnée mémorisée dans cette station et mémorisée dans la mémoire non volatile D. Il en est de même pour les transactions ouvertes par des processus applicatifs AP11, AP12, AP13 de la station S1.

La figure 5 représente schématiquement la même partie de cet exemple de ce système, en illustrant l'achèvement de la phase d'initialisation d'un processus applicatif. A titre d'exemple, la figure 5 représente l'établissement d'une relation entre le processus applicatif AP11 et le second processus gestionnaire SLDM1, et l'établisseemnt d'une relation, entre le processus applicatif AP02 et le second processus gestionnaire SLDM0. Le processus applicatif AP11 émet une demande d'établissement de liaison LR3 vers le second processus gestionnaire SLDM1. Cette demande provoque l'incrémentation de la valeur de compteur, Y, qui est mémorisée dans la mémoire C12 du processus SLDM. La valeur incrémentée, Y+1, n'est pas sauvegardée dans la mémoire non volatile. Elle est envoyée au processus applicatif AP11 qui a demandé la liaison, avec un accusé de réception ACK3 indiquant que la liaison est établie. La valeur incrémentée Y+1 est affectée à l'interface SCI11 du processus applicatif AP11 pour constituer désormais la valeur du deuxième champ AID1 des identificateurs des transactions ouvertes à la demande du processus applicatif AP11.

De manière analogue, dans la station principale normale NMS, le processus applicatif AP02 fait une demande d'établissement de liaison, LR4, auprès du processus gestionnaire SLDM0. Cette demande provoque l'incrémentation de la valeur de compteur, Y, mémorisée dans la mémoire C02 de ce processus. Cette valeur devient Y+1. Elle n'est pas sauvegardée dans la mémoire non volatile, mais est transmise, avec un accusé de réception ACK4, au processus applicatif AP02. Cette valeur constitue désormais la valeur affectée au deuxième champ AID0 des identificateurs des transactions ouvertes à la demande du processus applicatif AP02.

Le procédé est appliqué de manière analogue pour l'établissement de liaisons entre les processus applicatifs AP12, AP13 et le processus gestionnaire SLDM1. Les trois incrémentations successives de la valeur de compteur contenue dans la mémoire C12 conduit à affecter la valeur 2 au deuxième champ des identificateurs des transactions ouvertes par le processus applicatif AP12, et la valeur 3 au deuxième champ des identificateurs des transactions ouvertes par le processus AP13. Le procédé est appliqué de manière analogue pour les processus applicatifs AP01, et AP03 dans la station NMS. L'ordre dans lequel les processus applicatifs demandent l'établissement d'une liaison au processus gestionnaire SLDM dans la même station n'a évidemment aucune importance, et ne fait que modifier la valeur du deuxième champ AID.

La figure 6 représente schématiquement la même partie de cet exemple de système en illustrant l'attribution d'identificateurs de transaction, lorsque la phase d'initialisation a été terminée, pour les seconds processus gestionnaires SLDM0 et SLDM1, et pour les processus d'application AP11 et AP02 qui sont considérés à titre d'exemple. Dans cet exemple, le processus applicatif AP11 émet pour la première fois une demande TIR1 d'ouverture de transaction, auprès de son interface SCI11. Cette interface incrémente alors la valeur de compteur contenue dans la mémoire C13 qui est propre à cette interface. Dans cet exemple, la valeur de compteur passe de 0 à 1, parce que c'est la première demande d'ouverture depuis le démarrage ou le redémarrage le plus récent. Cette valeur est affectée au troisième champ TN1 de l'identificateur de la transaction qui est ouverte à la suite de cette demande TIR1. Les trois premiers champs de cet identificateur sont donc :

$$X+1, Y+1, 1$$

Pour d'autres ouvertures de transactions ultérieurement, la valeur de compteur mémorisée dans la mémoire C13 est incrémentée chaque fois d'une unité, ce qui permet de distinguer les différentes transactions ouvertes par le même processus applicatif AP11.

De manière analogue, dans le processus applicatif APO2 une T-ième demande TIR2 d'ouverture de transaction provoque l'incrémentation de la valeur de compteur mémorisée dans la mémoire C03 propre à l'interface SCI02. Cette valeur passe donc de T-1 à T dans cet exemple. Elle est affectée au troisième champ TN0 de l'identificateur de la transaction ouverte à la suite de cette demande TIR2.

Il est à remarquer que les valeurs des compteurs des interfaces SCI ne sont pas sauvegardées dans la mémoire non volatile D.

La figure 7 représente la même partie de cet exemple de système, en illustrant le cas d'une défaillance de la station principale normale NMS. Cette défaillance provoque la perte de toutes les données mémorisées dans les processus PLDM0, SLDM0, AP02 notamment. Cependant la valeur de compteur, X+2, qui était mémorisée dans la mémoire C01 au moment de la défaillance reste sauvegardée dans la mémoire non volatile D.

Cette défaillance provoque en outre une rupture des liaisons entre le premier processus gestionnaire PLDM0 et le second processus gestionnaire de chaque station, notamment le processus SLDM1 de la station S1. Tant que le processus PLDM' de secours, sur la station SMS, n'est pas activé et les liaisons entre les processus SLDM et ce processus rétablies, le recouvrement des transactions n'est plus assuré. Aussi, toute lecture ou écriture de données situées hors de la station où une transaction a été ouverte, ou tout accès à des données sauvegardées sur le disque, doivent être interdits.

Pour qu'il puisse détecter les transactions qui sont dans ce cas, le procédé selon l'invention consiste à remplacer par une valeur provisoire et identifiable comme telle, la valeur attribuée à un second processus gestionnaire SLDM par le premier processeur gestionnaire PLDM0; et il consiste à refaire la phase d'initialisation de chacun des seconds processus gestionnaires SLDM, mais sans l'émission de l'indicateur INIT, pour indiquer qu'au moins une liaison avait déjà été établie depuis le dernier démarrage ou redémarrage de chaque second processus SLDM.

Dans le cas de la station S1, la valeur affectée au premier champ des identificateurs, au cours de la phase d'initialisation de SLDM1 décrite précédemment, était X+2. Le processus SLDM1 met de côté cette valeur X+2 en la mémorisant dans un registre R11b. Il la remplace par une valeur provisoire, identifiable comme telle en lisant la valeur PI11 dans le registre R11a. Cette valeur provisoire est affectée au premier champ SID1 de l'identificateur de transaction. Cette valeur provisoire est diffusée par le processus gestionnaire SLDM1 vers les trois processus applicatifs AP11, AP12, AP13.

La figure 8 représente schématiquement la même partie de cet exemple de système, en illustrant le cas d'une transaction qui est ouverte pendant la période où la liaison reste interrompue entre les processus gestionnaires SLDM1 et PLDM0. Si par exemple, le processus applicatif AP11 demande l'ouverture d'une transaction, l'interface SCI11 incrémente d'une unité la valeur Z contenue dans la mémoire C13. La valeur des trois premiers champs de l'identificateur de transactions attribués à cette transaction est donc :

$$PI11, Y+1, Z+1$$

A cause de la valeur provisoire du premier champ, cette transaction ne pourra accéder à des données situées hors de la station S1, ou dans la mémoire non volatile D.

La figure 9 représente la station principale de secours SMS et la station S1, pour illustrer la restauration du fonctionnement complet du système à la suite d'une défaillance de la station principale normale NMS. Au moment de cette défaillance la valeur de compteur mémorisée dans la mémoire C01 avait atteint X+3 parce que les trois stations secondaires S1, S2, S3 avaient été comptées. Lors du démarrage de la station principale de secours SMS, en remplacement de la station principale normale NMS, la valeur de compteur X+3 qui est mémorisée dans la mémoire non volatile D est transférée dans la mémoire C01' propre au premier processus gestionnaire PLDM0' qui va remplacer le premier processus gestionnaire défunt PLDM0.

Dans la station S1, le second processus gestionnaire SLDM1 émet une demande LR5 d'établissement d'une liaison. Cette demande n'est pas accompagnée d'un indicateur INIT, parce que le second processus SLDM1 sait qu'une liaison avait été établie précédemment avec un premier processus gestionnaire, PLDM0. A cause de l'absence de l'indicateur INIT, cette demande LR6 ne provoque pas l'incrémentation de la valeur de compteur X+3. Il n'est pas nécessaire d'incrémenter cette valeur de compteur car la station n'est ni une nouvelle station qui démarrerait pour la première fois, ni une station déjà comptabilisée mais qui redémarrerait après avoir eu une défaillance nécessitant d'incrémenter la valeur du premier champ des identificateurs pour distinguer les transactions ouvertes après la défaillance et les transactions ouvertes avant la défaillance par des processus défunts.

La demande LR6 provoque simplement l'établissement d'une liaison avec envoi d'un accusé de réception, ACK5, au second processus gestionnaire SLDM1. Lorsque ce dernier constate qu'une liaison est rétablie, il peut utiliser à nouveau la valeur X+2 qui lui avait été affectée précédemment pour distinguer les transactions ouvertes par un processus applicatif de la station S1. Il lit donc la valeur X+2 qui avait été mise de côté dans le registe R11b de ce processus SLDM1, et l'affecte au premier champ SID1 de l'identificateur de transaction, en le diffusant vers tous les processus applicatifs ayant une liaison établie avec lui, c'est-à-dire vers les processus applicatifs AP11, AP12, AP13. La valeur de compteur, 3, mémorisée dans la mémoire C12 du second processus SLDM1 n'est pas modifiée.

La valeur 1 qui a été affectée au deuxième champ AID1 n'est pas modifiée. Par ailleurs, la valeur de compteur mémorisée dans la mémoire C13 est égale à Z+1 dans cet exemple, et n'a pas été affectée par la défaillance de la station principale normale NMS. La prochaine transaction ouverte dans la station S1 aura un identificateur dont les trois premiers champs seront :

$$X+2, 1, Z+2$$

De manière analogue, la valeur des deux premiers champs de l'indicateur de transaction est restaurée dans tous les autres processus applicatifs existant dans le système.

La figure 10 illustre le cas où la station S1 redémarre parce qu'elle a eu une défaillance. Tant que la phase d'initialisation du second processus gestionnaire SLDM1 et/ou la phase d'initialisation d'un processus applicatif AP11 ne sont pas achevées, des valeurs provisoires, PI11 et PI'11, sont affectées au premier et au deuxième champ, SID1 et AID1, de l'identificateur de transaction, comme cela a été décrit en se référant à la figure 2. La mémoire C12 et C13 sont remises à zéro. Des identificateurs de transaction peuvent immédiatement être affectés à des transactiions, mais ces transactions ne pourront accéder qu'aux données mémorisées dans la station S1.

La figure 10 illustre plus précisément l'étape d'initialisation du second processus gestionnaire SLDM1. Celui-ci émet une demande LR6 d'établissement de liaison, accompagné d'un indicateur INIT indiquant que c'est une première demande depuis le redémarrage de la station S1. Le premier processus gestionnaire PLDM0 répond par un accusé de réception ACK6. La valeur de compteur, X+3 dans cet exemple, qui est mémorisée dans la mémoire C01 du premier processus gestionnaire PLDM0, est incrémentée à X+4 car la demande LR6 est accompagnée d'un indicateur INIT. Le premier processus gestionnaire PLDM0 affecte la nouvelle valeur de compteur X+4 au second processus gestionnaire SLDM1 pour constituer la valeur du premier champ SID1.

Le processus SLDM1 diffuse cette valeur aux processus applicatifs AP11, AP12, AP13. Cette valeur X+4 permettra de distinguer les transactions ouvertes après la restauration du fonctionnement de la station S1, des transactions ouvertes avant la défaillance de la station S1 et qui seraient encore en cours de fermeture, malgré le fait que la valeur de compteur reparte de zéro.

Les valeurs mémorisées dans les mémoires C02 et C03 de la station principale NMS, ainsi que les valeurs affectées aux champs SID0, AID0, et TN0 sont quelconques et ne sont pas affectées. Le redémarrage de la station S1 consiste ensuite à achever la phase d'initialisation des processus applicatifs AP11, AP12, AP13, conformément à la description qui a été faite en se référant à la figure 5.

Selon un mode de réalisation préférentiel, chaque identificateur de transaction comporte un quatrième champ comprenant un mot de détection d'erreur, déterminé en appliquant un algorithme connu aux données constituant le premier, le deuxième, et le troisième champs. Cet algorithme peut consister par exemple à prendre le reste d'une division par un polynôme fixé. Ce mot de détection d'erreur permet aux différents logiciels gérant les transactions de détecter un identificateur erroné à cause d'une bogue dans un processus applicatif.

## Revendications

1. Procédé pour allouer un identificateur unique à chaque transaction dans un dispositif comportant une mémoire non volatile (D) et une pluralité de stations (S1, S2, S3, NMS, SMS), chaque station exécutant une pluralité de processus applicatifs (AP); toutes les stations et la mémoire non volatile étant reliées par un réseau de communication (CN), assurant l'intégrité des communications;

   **caractérisé en ce qu'**il consiste à :

- déterminer un premier champ (SID1) de cet identificateur, ayant :

  -- soit une valeur provisoire (PI11), identifiable comme telle et unique sur l'ensemble des stations, si l'ouverture de la transaction est demandée pendant une première phase d'initialisation;
  -- soit une valeur (X+1) attribuée par un premier processus gestionnaire de données (PLDM0) commun à l'ensemble des stations si l'ouverture est demandée après ladite première phase d'initialisation; ce premier processus gestionnaire mettant en oeuvre en outre un protocole connu de recouvrement de transactions;

- déterminer un deuxième champ (AID1) ayant :

  -- soit une valeur provisoire (PI'11), identifiable comme telle, et unique sur la station exécutant le processus applicatif (AP11) dit demandeur ayant demandé l'ouverture de la transaction, si l'ouverture est demandée pendant une seconde phase d'initialisation ;
  -- soit une valeur (Y+1) attribuée par un second processus gestionnaire de données (SLDM1), ce second processus gestionnaire étant propre à la station (S1) qui exécute le processus demandeur (AP 11), si l'ouverture de la transaction est demandée après ladite seconde phase d'initialisation;

- déterminer un troisième champ (TN1) en incrémentant d'une unité un compteur propre au processus demandeur (AP11);

  en ce que la valeur (X+1) attribuée par le premier processus gestionnaire (PLDM0) est le résultat de l'incrémentation, d'une unité, d'une première valeur de compteur (C01) propre à ce premier processus gestionnaire, et sauvegardée dans la mémoire non volatile (D); cette valeur de compteur étant restaurée après chaque défaillance de la station (NMS) exécutant le premier processus gestionnaire (PLDM0);

  en ce que la valeur (Y+1) attribuée par le second processus gestionnaire (SLDM1) est le résultat de l'incrémentation, d'une unité, d'une seconde valeur de compteur (C12) propre à ce second processus gestionnaire;

en ce que ladite première phase d'initialisation est achevée, pour un second processus gestionnaire donné (SLDM1), lorsqu'il a établi une liaison avec le premier processus gestionnaire (PLDM0);

et en ce que ladite seconde phase d'initialisation est achevée, pour un processus applicatif donné (AP11), lorsqu'il a établi une liaison avec le second processus gestionnaire (SLDM1) propre à la station où est exécuté ce processus applicatif.

2.  Procédé selon la revendication 1, **caractérisé en ce que** ladite première phase d'initialisation, pour un second gestionnaire de données donné (SLDM1), consiste à :

    -   faire demander (LR1) par ce second processus gestionnaire (SDLM1) l'établissement d'une liaison entre ce second processus gestionnaire (SLDM1) et le premier processus gestionnaire (PLDM0), en accompagnant cette demande d'un indicateur (INIT) permettant de distinguer si une telle liaison a déjà été établie ou non, depuis le dernier démarrage de ce second processus gestionnaire (SLDM1) ;
    -   établir une telle liaison;
    -   et si l'indicateur (INIT) indique que cette liaison est établie pour la première fois,

        --   incrémenter d'une unité la valeur (X) de compteur mémorisée dans la mémoire (C01) propre au premier processus gestionnaire (PLDM0) ;
        --   sauvegarder la valeur incrémentée (X+1) en l'inscrivant dans la mémoire non volatile (D);
        --   puis fournir la valeur (X ou X+1) de compteur au second processus gestionnaire (SLDM1) ayant demandé une liaison.

3.  Procédé selon la revendication 1, **caractérisé en ce que** ladite seconde phase d'initialisation, pour un processus applicatif donné (AP01), consiste à :

    -   faire demander (LR4) par ce processus applicatif (AP01) l'établissement d'une liaison entre ce processus applicatif et le second processus gestionnaire (SLDM0) qui est propre à la station où est exécuté ce processus applicatif;
    -   établir une telle liaison;
    -   incrémenter d'une unité la valeur (Y) de compteur (C12) propre à ce second processus gestionnaire (SLDM0).

4.  Procédé selon la revendication 1 **caractérisé en ce qu'**il consiste en outre à déterminer un quatrième champ comprenant un mot de détection d'erreur, en appliquant un algorithme connu aux donnéees constituant les trois autres champs (SID1, AID1, TN1).

5.  Système pour allouer un identificateur unique à chaque transaction dans un dispositif comportant une mémoire non volatile (D) et une pluralité de stations (S1, S2, S3, NMS, SMS), chaque station exécutant une pluralité de processus applicatifs (AP); toutes les stations et la mémoire non volatile étant reliées par un réseau de communication (CN), assurant l'intégrité des communications;

    **caractérisé en ce qu'**il comporte :

    -   des moyens pour déterminer un premier champ (SID1) de cet identificateur, ayant :

        --   soit une valeur provisoire (PI11), identifiable comme telle et unique sur l'ensemble des stations, si l'ouverture de la transaction est demandée pendant une première phase d'initialisation;
        --   soit une valeur (X+1) attribuée par un premier processus gestionnaire de données (PLDM0) commun à l'ensemble des stations si l'ouverture est demandée après ladite première phase d'initialisation; ce premier processus gestionnaire mettant en oeuvre en outre un protocole connu de recouvrement de transactions;

    -   des moyens pour déterminer un deuxième champ (AID1) ayant :

        --   soit une valeur provisoire (PI'11), identifiable comme telle, et unique sur la station exécutant le processus applicatif (AP11) dit demandeur ayant demandé l'ouverture de la transaction, si l'ouverture est demandée pendant une seconde phase d'initialisation ;
        --   soit une valeur (Y+1) attribuée par un second processus gestionnaire de données (SLDM1), ce second processus gestionnaire étant propre à la station (S1) qui exécute le processus demandeur (AP 11), si l'ouverture de la transaction est demandée après ladite seconde phase d'initialisation;

    -   des moyens pour déterminer un troisième champ (TN1) en incrémentant d'une unité un compteur propre au processus demandeur (AP11);

        en ce que la valeur (X+1) attribuée par le premier processus gestionnaire (PLDM0) est le résultat de l'incrémentation, d'une unité, d'une première valeur de compteur (C01) propre à ce premier processus gestionnaire, et sauvegardée dans la mémoire non volatile (D); cette valeur de compteur étant restaurée après chaque défaillance de la station (NMS) exécutant le premier processus gestionnaire (PLDM0) ; en ce que la valeur (Y+1) attribuée par le second processus gestionnaire (SLDM1) est le résultat de l'incrémentation, d'une unité, d'une seconde valeur de compteur (C12) propre à ce second processus gestionnaire; en ce que ladite première phase d'initialisation est achevée, pour un second processus gestionnaire donné (SLDM1), lorsqu'il a établi une liaison avec le premier processus gestionnaire (PLDM0) ; et en ce que ladite seconde phase d'initialisation est achevée, pour un processus applicatif donné (AP11), lorsqu'il a établi une liaison avec le second processus gestionnaire (SLDM1) propre à la station où est exécuté ce processus applicatif.

6.  Système selon la revendication 5, **caractérisé en ce qu'**un second gestionnaire de données donné (SLDM1) comporte des moyens pour, au cours de la première phase d'initialisation :

    -   faire demander (LR1) par ce second processus gestionnaire (SDLM1) l'établissement d'une liaison entre ce second processus gestionnaire (SLDM1) et le premier processus gestionnaire (PLDM0), en accompagnant cette demande d'un indicateur (INIT) permettant de distinguer si une telle liaison a déjà été établie ou non, depuis le dernier démarrage de ce second processus gestionnaire (SLDM1) ;
    -   établir une telle liaison;
    -   et si l'indicateur (INIT) indique que cette liaison est établie pour la première fois,

        --  incrémenter d'une unité la valeur (X) de compteur mémorisée dans la mémoire (C01) propre au premier processus gestionnaire (PLDM0) ;
        --  sauvegarder la valeur incrémentée (X+1) en l'inscrivant dans la mémoire non volatile (D);
        --  puis fournir la valeur (X ou X+1) de compteur au second processus gestionnaire (SLDM1) ayant demandé une liaison.

7.  Système selon la revendication 5, caractérisé en ce chaque processus applicatif (AP01) comporte des moyens pour, au cours de ladite seconde phase d'initialisation,

    -   faire demander (LR4) par ce processus applicatif (AP01) l'établissement d'une liaison entre ce processus applicatif et le second processus gestionnaire (SLDM0) qui est propre à la station où est exécuté ce processus applicatif;
    -   établir une telle liaison;
    -   incrémenter d'une unité la valeur (Y) de compteur (C12) propre à ce second processus gestionnaire (SLDM0).

8.  Système selon la revendication 5 **caractérisé en ce qu'**il comporte en outre des moyens pour déterminer un quatrième champ comprenant un mot de détection d'erreur, en appliquant un algorithme connu aux donnéees constituant les trois autres champs (SID1, AID1, TN1).


**Patentansprüche**

1.  Verfahren zum Zuweisen eines eindeutigen Bezeichners zu jeder Transaktion in einer Einrichtung, die einen nichtflüchtigen Speicher (D) und einen Vielzahl von Stationen (S1, S2, S3, NMS, SMS) aufweist, wobei jede Station eine Vielzahl von Anwendungsprozessen (AP) ausführt; wobei alle Stationen und der nichtflüchtige Speicher durch ein Nachrichtennetz (CN) verbunden sind, das die Integrität der Nachrichten sicherstellt; **dadurch gekennzeichnet, dass** es darin besteht:

    -   ein erstes Feld (SID1) in diesem Bezeichner zu bestimmen, das aufweist:

        --  entweder einen vorläufigen Wert (PI11), der als solcher idencifizierbar und auf der Gesamtheit der Stationen einmalig ist, wenn die Eröffnung der Transaktion während einer ersten Initialisierungsphase angefordert wird;
        --  oder einen Wert (X+1), der durch einen der Gesamtheit der Stationen gemeinsamen, ersten Datenverwaltungsprozess (PLDM0) zugewiesen wird, wenn die Eröffnung nach der ersten Initialisierungsphase angefordert wird; wobei dieser Verwaltungsprozess außerdem ein bekanntes Protokoll zur Abdeckung von Transaktionen durchführt ;

    -   ein zweites Feld (AID1) zu bestimmen mit:

        --  entweder einen vorläufigen Wert (PI'11), der als solcher identifizierbar und auf der den Anwendungsprozess ausführenden Station, Anforderer genannt, die die Eröffnung der Transaktion angefordert hat, einmalig ist, wenn die Eröffnung der Transaktion während einer zweicen Initialisierungsphase angefordert wird;

-- oder einen Wert (Y+1), der von einem zweiten Datenverwaltungsprozess (SLDM1) zugewiesen wird, wobei dieser zweite Verwaltungsprozess der Station (S1) eigen ist, die den Anforderungsprozess (AP 11) ausführt, wenn die Eröffnung der Transaktion nach der zweiten Initialisierungsphase angefordert wird;

- ein drittes Feld (TN1) zu bestimmen, wobei ein dem Anforderungsprozess (AP11) eigener Zähler um eine Einheit erhöht wird;

dadurch, dass der vom ersten Verwaltungsprozess (PLDM0) zugewiesene Wert des Ergebnis einer Erhöhung eines ersten Wertes eines diesem Verwaltungsprozess eigenen Zählers (C01) um eine Einheit ist und im nichtflüchtigen Speicher (D) geschützt ist; wobei dieser Zählerwert nach jedem Ausfall der Station (NMS), die den ersten Verwaltungsprozess (PLDM0) ausführt, wiederhergestellt wird; dadurch, dass der vom zweiten Verwaltungsprozess (SLDM1) zugewiesene Wert das Ergebnis einer Erhöhung eines zweiten Wertes eines dem zweiten Verwaltungsprozess eigenen Zählers (C12) um eine Einheit ist; dadurch, dass die erste Initialisierungsphase für einen gegebenen zweiten Verwaltungsprozess (SLDM1) fehlgeschlagen ist, wenn eine Verbindung mit dem ersten Verwaltungsprozess (PLDM0) aufgebaut wurde; und dadurch, dass die zweite Initialisierungsphase für einen gegebenen Anwendungsprozess (AP11) fehlgeschlagen ist, wenn eine Verbindung mit dem der Station, bei der dieser Anwendungsprozess ausgeführt wird, eigenen zweiten Verwaitungsprozess (SLDM1) aufgebaut wurde;

2. Verfahren nach Anspruch 1, **dadurch gekennzeichnet, dass** die erste Initialisierungsphase für eine zweite gegebene Datenverwaltung (SLDM1) darin besteht:

- von diesem zweiten Verwaltungsprozess (SDLM1) den Aufbau einer Verbindung zwischen diesem zweiten Verwaltungsprozess (SLDM1) und dem ersten Verwaltungsprozess (PLDM0) anfordern zu lassen, wobei diese Anforderung von einem Indikator (INIT) begleitet wird, der gestattet zu unterscheiden, ob eine solche Verbindung seit dem letzten Start dieses zweiten Verwaltungsprozesses (SLDM1) bereits aufgebaut wurde oder nicht;
- eine solche Verbindung aufzubauen;
- und wenn der Indikator (INIT) angibt, dass diese Verbindung zum ersten Mal aufgebaut wird;

-- den Wert (X) des Zählers, der im dem ersten Verwaltungsprozess (PLDM0) eigenen Speicher (C01) gespeichert ist, um eine Einheit zu erhöhen;

-- den erhöhten Wert (X+1) zu schützen, indem er in den nichtflüchtigen Speicher (D) eingetragen wird;

-- dann den Wert (X oder X+1) des Zählers an den zweiten Verwaltungsprozess (SLDM1) zu liefern, der eine Verbindung angefordert hat.

3. Verfahren nach Anspruch 1, **dadurch gekennzeichnet, dass** die zweite Initialisierungsphase für einen gegebenen Anwendungsprozess darin besteht:

- vom Anwendungsprozess (AP01) den Aufbau einer Verbindung zwischen diesem Anwendungsprozess und dem zweiten Verwaltungsprozess (SLDM0), der der Station eigen ist, bei der dieser Anwendungsprozess ausgeführt wird, anfordern zu lassen;
- eine solche Verbindung aufzubauen;
- den Wert (Y) des diesem zweiten Verwaltungsprozess (SLDM0) eigenen Zählers (C12) um eine Einheit zu erhöhen;

4. Verfahren nach Anspruch 1, **dadurch gekennzeichnet, dass** es außerdem darin besteht ein viertes Feld zu bestimmen, das ein Wort der Fehlerkennung umfasst, wobei auf die Daten, die die drei anderen Felder (SID1, AID1, TN1) bilden, ein bekannter Algorithmus angewendet wird.

5. System zum Zuweisen eines eindeutigen Bezeichners zu jeder Transaktion in einer Einrichtung, die einen nichtflüchtigen Speicher (D) und einen Vielzahl von Stationen (S1, S2, S3, NMS, SMS) aufweist, wobei jede Station eine Vielzahl von Anwendungsprozessen (AP) ausführt; wobei alle Stationen und der nichtflüchcige Speicher durch ein Nachrichtennetz (CN) verbunden sind, das die Integrität der Nachrichten sicherstellt; **dadurch gekennzeichnet, dass** es umfasst:

- Mittel zum Bestimmen eines ersten Feldes (SID1) dieses Bezeichners, das aufweist:

-- entweder einen vorläufigen Wert (PI11), der als solcher identifizierbar und auf der Gesamtheit der Stationen einmalig ist, wenn die Eröffnung der Transaktion während einer ersten Initialisierungsphase angefordert wird;

-- oder einen Wert (X+1), der durch einen der Gesamtheit der Stationen gemeinsamen, ersten Datenverwaltungsprozess (PLDM0) zugewiesen wird, wenn die Eröffnung nach der ersten Initialisierungsphase angefordert wird; wobei dieser Verwaltungsprozess außerdem ein bekanntes Protokoll zur Abdeckung von Transaktionen durchführt;

- Mittel zum Bestimmen eines zweiten Feldes (AID1) mit:

-- entweder einen vorläufigen Wert (PI'11), der als solcher identifizierbar und auf der den Anwendungsprozess ausführenden Station, Anforderer genannt, die die Eröffnung der Transaktion angefordert hat, einmalig ist, wenn die Eröffnung der Transaktion während einer zweiten Initialisierungsphase angefordert wird;

-- oder einen Wert (Y+1), der von einem zweiten Datenverwaltungsprozess (SLDM1) zugewiesen wird, wobei dieser zweite Verwaltungsprozess der Station (S1) eigen ist, die den Anforderungsprozess (AP 11) ausführt, wenn die Eröffnung der Transaktion nach der zweiten Initialisierungsphase angefordert wird;

- Mittel zum Bestimmen eines dritten Feldes (TN1), wobei ein dem Anforderungsprozess (AP11) eigener Zähler um eine Einheit erhöht wird;

dadurch, dass der vom ersten Verwaltungsprozess (PLDM0) zugewiesene Wert des Ergebnis einer Erhöhung eines ersten Wertes eines diesem Verwaltungsprozess eigenen Zählers (C01) um eine Einheit ist und im nichtflüchtigen Speicher (D) geschützt ist; wobei dieser Zählerwert nach jedem Ausfall der Station (NMS), die den ersten Verwaltungsprozess (PLDM0) ausführt, wiederhergestellt wird;
dadurch, dass der vom zweiten Verwaltungsprozess (SLDM1) zugewiesene Wert das Ergebnis einer Erhöhung eines zweiten Wertes eines dem zweiten Verwaltungsprozess eigenen Zählers (C12) um eine Einheit ist;
dadurch, dass die erste Initialisierungsphase für einen gegebenen zweiten Verwaltungsprozess (SLDM1) fehlgeschlagen ist, wenn eine Verbindung mit dem ersten Verwaltungsprozess (PLDM0) aufgebaut wurde;
und dadurch, dass die zweite Initialisierungsphase für einen gegebenen Anwendungsprozess (AP11) fehlgeschlagen ist, wenn eine Verbindung mit dem der Station, bei der dieser Anwendungsprozess ausgeführt wird, eigenen zweiten Verwaltungsprozess (SLDM1) aufgebaut wurde;

6. System nach Anspruch 5, **dadurch gekennzeichnet, dass** eine zweite gegebene Datenverwaltung (SLDM1) Mittel aufweist, um während der ersten Initialisierungsphase:

- von diesem zweicen Verwaltungsprozess (SDLM1) den Aufbau einer Verbindung zwischen diesem zweiten Verwaltungsprozess (SLDM1) und dem ersten Verwaltungsprozess (PLDM0) anfordern zu lassen, wobei diese Anforderung von einem Indikator (INIT) begleitet wird, der gestattet zu unterscheiden, ob eine solche Verbindung seit dem letzten Start dieses zweiten Verwaltungsprozesses (SLDM1) bereits aufgebaut wurde oder nicht;
- eine solche Verbindung aufzubauen;
- und wenn der Indikator (INIT) angibt, dass diese Verbindung zum ersten Mal aufgebaut wird;

-- den Wert (X) des Zählers, der im dem ersten Verwaltungsprozess (PLDM0) eigenen Speicher (C01) gespeichert ist, um eine Einheit zu erhöhen;

-- den erhöhten Wert (X+1) zu schützen, indem er in den nichtflüchtigen Speicher (D) eingetragen wird;

-- dann den Wert (X oder X+1) des Zählers an den zweiten Verwaltungsprozess (SLDM1) zu liefern, der eine Verbindung angefordert hat.

7. System nach Anspruch 5, **dadurch gekennzeichnet, dass** jeder Anwendungsprozess (AP01) Mittel aufweist, um während der zweiten Initialisierungsphase:

- vom Anwendungsprozess (AP01) den Aufbau einer Verbindung zwischen diesem Anwendungsprozess und dem zweiten Verwaltungsprozess (SLDM0), der der Station eigen ist, bei der dieser Anwendungsprozess ausgeführt wird, anfordern zu lassen;
- eine solche Verbindung aufzubauen;
- den Wert (Y) des diesem zweiten Verwaltungsprozess (SLDM0) eigenen Zählers (C12) um eine Einheit zu erhöhen;

8. System nach Anspruch 5, **dadurch gekennzeichnet, dass** es außerdem Mictel umfasst, um ein viertes Feld zu bestimmen, das ein Wort der Fehlerkennung umfasst, wobei auf die Daten, die die drei anderen Felder (SID1, AID1, TN1) bilden, ein bekannter Algorithmus angewendet wird.

## Claims

1. Method of assigning a unique identifier to each transaction in a device including a non-volatile memory (D) and a plurality of stations (S1, S2, S3, NMS, SMS), each station executing a plurality of application processes (AP); all the stations and the non-volatile memory being connected by a communication network (CN) assuring the integrity of communications; **characterized in that** it consists in:

   - determining a first field (SID1) of said identifier, having:

     -- either a temporary value (PI11) identifiable as such and unique to the set of stations, if opening of the transaction is requested during a first initialization phase;
     -- or a value (X + 1) assigned by a first data manager process (PLDM0) common to all the stations if the opening is requested after said first initialization phase; said first manager process further implementing a transaction recovery protocol known in itself;

   - determining a second field (AID1) having:

     -- either a temporary value (PI'11) identifiable as such and unique to the station executing the requesting application process (AP11) that requested the opening of the transaction if the opening is requested during a second initialization phase;
     -- or a value (Y + 1) assigned by a second data manager process (SLDM1), said second manager process being specific to the station (S1) that is executing the requesting process (AP11), if the opening of the transaction is requested after said second initialization phase;

   - determining a third field (TN1) by incrementing by one unit a counter value specific to the requesting process (AP11);

   in that the value (X + 1) assigned by the first manager process (PLDMO) is the result of incrementing by one unit a first counter value (C01) specific to said first manager process and backed up in the non-volatile memory (D), said counter value being restored after each failure of the station (NMS) executing the first manager process (PLDM0);
   in that the value (Y + 1) assigned by the second manager process (SLDM1) is the result of incrementing by one unit a second counter (C12) value specific to said second manager process;
   in that said first initialization phase is completed for a given second manager process (SLDM1) when it has set up a link with the first manager process (PLDMO); and
   in that said second initialization phase is completed for a given application process (AP11) when it has set up a link with the second manager process (SLDM1) specific to the station in which said application process is executed.

2. Method according to claim 1 **characterized in that** said first initialization phase for a given second data manager (SLDM1) consists in:

   - said second manager process (SLDM1) requesting (LR1) the setting up of a link between said second manager process (SLDM1) and the first manager process (PLDM0), said request being accompanied by an indicator (INIT) for distinguishing whether a link of such kind has already been set up since the last starting of said second manager process (SLDM1);
   - setting up a link of this kind; and
   - if the indicator (INIT) indicates that said link is set up for the first time:

     -- incrementing by one unit the counter value (X) stored in the memory (C01) specific to the first manager process (PLDM0);
     -- backing up the incremented value (X + 1) by writing it in the non-volatile memory (D); and then
     -- supplying the counter value (X or X + 1) to the second manager process (SLDM1) that requested a link.

3. Method according to claim 1 **characterized in that** said second initialization phase for a given application process (AP01) consists in:

   - said application process (AP01) requesting (LR4) the setting up of a link between said application process and the second manager process (SLDM0) that is specific to the station in which said application process is executed;
   - setting up a link of this kind; and
   - incrementing by one unit the counter (C12) value (Y) specific to said second manager process (SLDMO).

4. Method according to claim 1, **characterized in that** it further consists in determining a fourth field containing an error detection word by applying an algorithm known in itself to the data constituting the other three fields (SID1, AID1, TN1).

5. System of assigning a unique identifier to each transaction in a device including a non-volatile memory (D) and a plurality of stations (S1, S2, S3, NMS, SMS), each station executing a plurality of application processes (AP); all the stations and the non-volatile memory being connected by a communication network (CN) assuring the integrity of communications; **characterized in that** it includes:

- means for determining a first field (S1D1) of said identifier, having:

  -- either a temporary value (P111) identifiable as such and unique to the set of stations, if opening of the transaction is requested during a first initialization phase;
  -- or a value (X + 1) assigned by a first data manager process (PLDM0) common to all the stations if the opening is requested after said first initialization phase; said first manager process further implementing a transaction recovery protocol known in itself;

- means for determining a second field (AID1) having:

  -- either a temporary value (PI'11) identifiable as such and unique to the station executing the requesting application process (AP11) that requested the opening of the transaction if the opening is requested during a second initialization phase;
  -- or a value (Y + 1) assigned by a second data manager process (SLDM1), said second manager process being specific to the station (S1) that is executing the requesting process (AP11), if the opening of the transaction is requested after said second initialization phase;

- means for determining a third field (TN1) by incrementing by one unit a counter value specific to the requesting process (AP11);

  in that the value (X + 1) assigned by the first manager process (PLDM0) is the result of incrementing by one unit a first counter value (C01) specific to said first manager process and backed up in the non-volatile memory (D), said counter value being restored after each failure of the station (NMS) executing the first manager process (PLDM0); in that the value (Y + 1) assigned by the second manager process (SLDM1) is the result of incrementing by one unit a second counter (C12) value specific to said second manager process; in that said first initialization phase is completed for a given second manager process (SLDM1) when it has set up a link with the first manager process (PLDM0); and in that said second initialization phase is completed for a given application process (AP11) when it has set up a link with the second manager process (SLDM1) specific to the station in which said application process is executed.

6. System according to claim 5 **characterized in that** a given second data manager (SLDM1) includes means for, during the first initialization phase:

- causing said second manager process (SLDM1) to request (LR1) the setting up of a link between said second manager process (SLDM1) and the first manager process (PLDM0), said request being accompanied by an indicator (INIT) for distinguishing whether a link of such kind has already been set up since the last starting of said second manager process (SLDM1);
- setting up a link of this kind; and
- if the indicator (INIT) indicates that said link is set up for the first time:

  -- incrementing by one unit the counter value (X) stored in the memory (C01) specific to the first manager process (PLDM0);
  -- backing up the incremented value (X + 1) by writing it in the non-volatile memory (D); and then
  -- supplying the counter value (X or X + 1) to the second manager process (SLDM1) that requested a link.

7. System according to claim 5 **characterized in that** each application process (AP01) includes means for, during said second initialization phase:

- causing said application process (AP01) to request (LR4) the setting up of a link between said application process and the second manager process (SLDM0) that is specific to the station in which said application process is executed;
- setting up a link of this kind; and
- incrementing by one unit the counter (C12) value (Y) specific to said second manager process (SLDM0).

8. System according to claim 5, **characterized in that** it further comprises means for determining a fourth field containing an error detection word by applying an algorithm known in itself to the data constituting the other three fields (SID1, AID1, TN1).

# FIG.1

# FIG. 2

EP 0 750 257 B1

# FIG. 3

EP 0 750 257 B1

FIG. 4

# FIG. 5

S1

NMS

PLDM0

SLDM1
Y→Y+1 — C12
X+1
SID1

LR3 ACK3

AP11

C13
0

SID1 ··· TN1
X+1 Y+1 0

AID1

SCI11

CO1
X→2

SLDM0
SID0 Y→Y+1 — CO2
X+2

LR4 ACK4 AP02

CO3
0

SID0 AID0 ··· TN0
X+2 Y+1 0

SCI02

EP 0 750 257 B1

# FIG. 6

# FIG. 7

EP 0 750 257 B1

# FIG. 8

EP 0 750 257 B1

# FIG.9

EP 0 750 257 B1

# FIG. 10

EP 0 750 257 B1